# EUROPEAN PATENT SPECIFICATION

(11) **EP 2 673 282 B1**
(45) Date of publication and mention of the grant of the patent: **09.11.2016**
(21) Application number: 12716591.8
(22) Date of filing: 08.02.2012
(51) Int. Cl.: C07F 9/38, C07F 9/58, C07F 9/6506

(54) **NOVEL PROCESS FOR THE PREPARATION OF DRONIC ACIDS**
NEUES VERFAHREN ZUR HERSTELLUNG DRONISCHER SÄUREN
NOUVEAU PROCÉDÉ DE PRÉPARATION D'ACIDES DRONIQUES

(30) Priority: 08.02.2011 HU P1100071
(43) Date of publication of application: 18.12.2013
(73) Proprietor: Richter Gedeon Nyrt., 1103 Budapest (HU)
(72) Inventor: KEGLEVICH, György, H-1114 Budapest (HU); GRÜN, Alajos, H-1105 Budapest (HU); GARADNAY, Sándor, H-2500 Esztergom (HU); NEU, József, H-1133 Budapest (HU)
(74) Representative: Hoffmann Eitle
(86) International application number: PCT/HU2012/000009
(87) International publication number: WO 2012/107787

(56) References cited:
- WO-A1-2006/071128
- WO-A1-2006/134603
- WO-A1-2008/056129
- WO-A2-2007/109542
- US-A- 4 190 615
- US-A1- 2008 220 037
- PRISHCHENKO A A ET AL: "Reaction of substituted benzalchlorides with phosphorous acid esters", RUSSIAN JOURNAL OF GENERAL CHEMISTRY, NAUKA/INTERPERIODICA, MO, vol. 76, no. 5, 1 May 2006 (2006-05-01), pages 835-836, XP019407294, ISSN: 1608-3350, DOI: 10.1134/S107036320605029X

## Description

### Field of the invention

The present invention relates to a novel process for the preparation of dronic acids of formula (I), 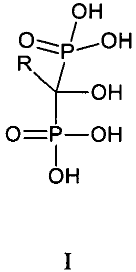 wherein R represents
saturated or unsaturated C1-C4 alkyl group which optionally contains 0-5 heteroatoms selected from N, O, S;
saturated or unsaturated C1-C10 cycloalkyl group which optionally contains 0-5 heteroatoms selected from N, O, S;
alkyl group which contains 1-10 carbon atoms and/or 0-5 heteroatom and which is substituted with an aromatic or heteroaromatic ring;
and the preparation for pharmaceutical compositions comprising them.

### Background of the invention

Bisphosphonates inhibit osteolysis, their therapeutical use was first examined in the 1960's. Since then, it has been proved that bisphosphonates are effective in the treatment of osteoporosis, Paget's diseases, bone metastasis of breast cancer and certain tumours. Bisphosphonates are usually synthetized by reacting the carboxylic acid derivatives with phosphorus trichloride in the presence of phosphorous acid. Phosphorus trichloride is usually used in excess and that effects a big amount of HCl gas formation.

International patent application WO2006134603 discloses a process in which 4.6 molar equivalent phosphorus trichloride is used in the presence of 4.6 molar equivalent phosphorous acid.

In international patent application WO2008056129, a process is described in which 2 molar equivalent phosphorus trichloride and 1.5 molar equivalent phosphorous acid are used in phosphorylation. In the process described in international patent application WO07016982 which concerns only zolendronic acid, phosphorous acid is not applied, but it is prepared in situ in the reaction mixture, and thereby phosphorous acid is used in a 6X excess.

Patent applications EP0275821 and WO2007109542 described processes in which phosphoric acid is used instead of phosphorous acid and phosphorus trichloride is used in a 3X excess. Prishchenko et al., Russian J Gen Chem, 2006, 76(5), 835-6 discloses the synthesis of arylmethylenediphosphonates that were obtained from a reaction of substituted benzalchlorides with triethyl phosphite in the presence of zinc chloride as a catalyst.

US 2008/220037 A1, US 4 190 615 A and WO 2006/071128 A1 disclose a process for the preparation of bisphosphonic acid compounds.

In light of the technical literature, it seemed that the presence of phosphorous acid or phosphoric acid is necessary for phosphorylation.

There is a need to develop a new process, wherein reagents are applied in the required amount only, and therefore, the process is economical, easily feasible, harmful and hardly treatable secondary products form in low amount.

### Summary of the invention

The present invention relates to a novel process for the preparation of dronic acids of formula (I), 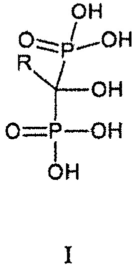 wherein R represents
saturated or unsaturated C1-C4 alkyl group which optionally contains 0-5 heteroatoms selected from N, O, S;
saturated or unsaturated C1-C10 cycloalkyl group which optionally contains 0-5 heteroatoms selected from N, O, S;
alkyl group which contains 1-10 carbon atoms and/or 0-5 heteroatom and which is substituted with an aromatic or heteroaromatic ring;
and the preparation for pharmaceutical compositions comprising them.

### Detailed description of the invention

We have developed a new process for the preparation of dronic acids, wherein unnecessary sources of phophorous are left and the use of materials is optimised. From an economic point of view, it is much more effective than the previous processes known from literature.

We could reduce the formation of secondary products and at the same time, the yield was not lower than that of the known processes.

During our experiments, we have surprisingly found that phosphorous acid is not required for phosphorilation. Moreover, if a reagent which is suitable for the formation of halide acid is used, less phosphorous trichloride is required and the product is obtained in good yield. Another advantage of the process that reaction time is shorter and less solvent is required, furthermore, because of reduced amount of phosphorous trichloride, formation of HCl gas decreases considerably.

This result is surprising as, according to technical literature, phosphorilation needs phosphorous acid as a source of phosphorus beside phosphorous trichloride.

We have developed a new process which makes it possible to produce bisphosphonic acids on an industrial scale, in an economically and environmentally proper way.

According to the present invention, carboxylic acid of formula (II) 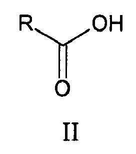 wherein R represents:
saturated or unsaturated C1-C4 alkyl group which optionally contains 0-5 heteroatoms selected from N, O, S;
saturated or unsaturated C1-C10 cycloalkyl group which optionally contains 0-5 heteroatoms selected from N, O, S;
alkyl group which contains 1-10 carbon atoms and/or 0-5 heteroatom and which is substituted with an aromatic or heteroaromatic ring, advantageously (1H-imidazol-1-yl)methyl group or (3-pyridyl)methyl group;
is reacted with diphosgene, triphosgene, mesyl chloride, phosphorous oxychloride, thionyl chloride, phosphorous trichloride or bromine analogues thereof in a solvent chosen from chlorobenzene, sulpholane or methanesulphonic acid in order to form the acid chloride or acid bromide, then phosphorus trichloride is added to the reaction mixture in order to carry out phosphorylation. The mixture is hydrolyzed with water, and then, the product is obtained by setting pH value, the process being performed without addition of phosphorous acid or phosphoric acid.

According to a prefered embodiment of the invention methanesulphonic acid is used as a solvent.

According to the process of the present invention, the proportion between the solvent and the starting compound may vary between 1:1 and 20:1.

In the process, according to the present invention, acid chloride and acid bromide are prepared as acid halogenide, by using diphosgene, triphosgene, mesyl chloride, phosphorous oxychloride, thionyl chloride, phosphorous trichloride and brom analogues thereof.

According to the invention, the applied temperature may vary between 25-120°C, advantageously between 40-100°C.

From compounds prepared by the above-described process of the invention, pharmaceutical compositions can be prepared by known methods.

The obtained products were analyzed by Mettler-Toledo automatic titrator, Aglient 1100 liquid chromatography equipment, Shimadzu DSC-50 Calorimeter.

In the following, the invention is illustrated by way of examples. However, the examples are merely intended to illustrate the invention and should not be construed as limiting.

### EXAMLPES

### Example 1

### Preparation of [1- hydroxy -2-(1H-imidazol-1-yl)ethylidene]bisphosphonic acid

6.3 g (0.05 mol) imidazol-1-yl-acetic acid is dissolved in 14 ml methanesulfonic acid while stirring. After 30 minutes of stirring, 5.9 g (0.020 mol) triphosgene is added and the reaction mixture is warmed to 80 °C. 4 hours later, 9.2 ml (0.11 mol) phosphorus trichloride is added dropwise, then the mixture is stirred for 16 hours at 80 °C. Next day, the mixture is left to cool down to room temperature, then 36 ml water is added dropwise. The mixture is warmed to 105-110 °C and then, stirred for 5 hours. Then the reaction mixture is purified with 0.75 g activated carbon and then, filtered, washed with 5 ml water and then 10 M NaOH solution is added dropwise until pH is 1.8. The suspension is stirred for 1 day, then the precipitated product is filtered, washed with water and dried. Yield: 8.1 g (59 %) Free acid content: 19.5 % Purity: 82 %
The product is recrystallized with a 5 X excess of 1 N HCl. Yield: 5.5 g (41 %), Free acid content: 99 % , Purity: 100 %

### Example 2

### Preparation of [1-hydroxy-2-(1H-imidazol-1-yl)ethylidene]bisphosphonic acid

4.2 g (33.3 mmol) imidazol-1-yl-acetic acid is dissolved in 12 ml methanesulfonic acid while stirring. After dissolution, 3.2 ml (41.3 mmol) mesyl chloride is added dropwise. The mixture is stirred for 4 hours, then warmed to 50-60 °C and 6.4 ml (73.3 mmol) phosphorus trichloride is added dropwise. The reaction mixture is warmed to 70-75 °C, then after gas formation (approximately 4 hours), it is stirred for a further 30 minutes. The mixture is left to cool down, then 24 ml water is added dropwise. The mixture is warmed to 110 °C and stirred for 5 hours, then it is left to cool down. The reaction mixture is purified with 0.5 g activated carbon and then, filtered, washed with 4 ml water and then, 40 % NaOH solution is added dropwise until pH is 0.25. The suspension is stirred for 1 day, then filtered, washed with water and dried. Yield: 3.0 g (62 %) Free acid content: 25 % Purity: 93 %
The product is recrystallized with a 5 X excess of 1 N HCl. Yield: 2.2 g (45 %), Free acid content: 99 % ,Purity: 100 %

### Example 3

### Preparation of [1-hydroxy-2-(1H-imidazol-1-yl)ethylidene]bisphosphonic acid

6.3 g (0.05 mol) imidazol-1-yl-acetic acid is dissolved in 14 ml methanesulfonic acid while stirring. After 30 minutes of stirring, 13.6 ml (0.16 mol) phosphorus trichloride is added dropwise, then the mixture is stirred for 3 hours at 80 °C. The mixture is left to cool down to room temperature, then 36 ml water is added dropwise. The mixture is warmed to 105-110 °C and then, stirred for 5 hours. Then the reaction mixture is purified with 0.75 g activated carbon and then filtered, washed with 5 ml water and then, 10 M NaOH solution is added droppwise until pH is 1.8. The suspension is stirred for 1 day then the precipitated product is filtered, washed with water and dried. Yield: 10.1 g (74 %), Free acid content: 23 %, Purity: 83 %
The product is recrystallized with a 5 X excess of 1 N HCl. Yield: 6.3 g (46 %), Free acid content: 98 %, Purity: 98 %

### Example 4

### Preparation of [1-hydroxy-2-(3-pyridiyl)-ethylidene]bisphosphonic acid

6.9 g (0.05 mol) 3-pyridylacetic acid is dissolved in 14 ml methanesulfonic acid while stirring. After 30 minutes of stirring 13.6 ml (0.16 mol) phosphorus trichloride is added dropwise. The reaction mixture is warmed to 80 °C and stirred, and after the end of gas formation, it is stirred for a further 30 minutes (for approximately 3 hours). The mixture is cooled down and 36 ml water is added dropwise. The mixture is warmed to 105-110 °C and then, stirred for 5 hours. Then the reaction mixture is purified with 0.75 g activated carbon and, then filtered. 10 M NaOH solution is added droppwise to filtrate until pH is 2. The obtained suspension is stirred for 3 hours, then filtered, washed with water and dried. Yield: 10.5 g (74 %), Free acid content: 89 %, Purity: 100 %

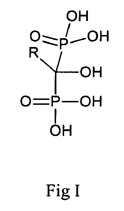

## Claims

1. A process for the preparation of compounds of formula (I) 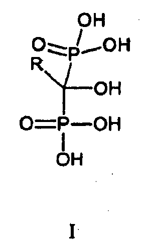 wherein R represents:
saturated or unsaturated C1-C4 alkyl group which optionally contains 0-5 heteroatoms selected from N, O, S;
saturated or unsaturated C1-C10 cycloalkyl group which optionally contains 0- 5 heteroatoms selected from N, O, S;
alkyl group which contains 1-10 carbon atoms and/or 0-5 heteroatom and which is substituted with an aromatic or heteroaromatic ring;
**characterized in that** carboxylic acid of formula (II) 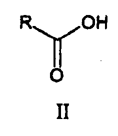
is reacted with diphosgene, triphosgene, mesyl chloride, phosphorous oxychloride,
thionyl chloride, phosphorous trichloride or bromine analogues thereof in a solvent chosen from chlorobenzene, sulpholane or methanesulphonic acid in order to form the acid chloride or acid bromide, then phosphorus trichloride is added to the reaction mixture in order to carry out phosphorylation, then the mixture is hydrolyzed with water, then the product is obtained by setting pH value,
the process being performed without addition of phosphorous acid or phosphoric acid.

2. A process according to claim 1, **characterized in that** R is (1H-imidazol-1-yl)methyl-group.

3. A process according to claim 1, **characterized in that** R is (3-pyridyl)methyl-group.

4. A process according to any of claims 1-3, **characterized in that** the solvent used in phosphorylation is methanesulphonic acid.

5. A process according to any of claims 1-4, **characterized in that** in phosphorylation the proportion between the solvent and the starting compound is between 1 : 1 and 20: 1.

6. A process according to any of claims 1-5, **characterized in that** applied temperature in phosphorylation is between 25-120 °C.

7. A process according to claim 6, **characterized in that** the temperature is between 40-100 °C.

## Patentansprüche

1. Verfahren zur Herstellung einer Verbindung der Formel (I) : 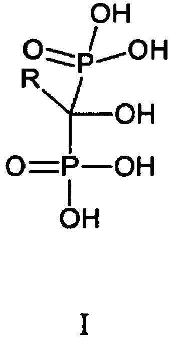 worin R darstellt:
eine gesättigte oder ungesättigte C₁₋₄-Alkylgruppe, die gegebenenfalls 0 bis 5 Heteroatome, ausgewählt aus N, O, S, enthält;
eine gesättigte oder ungesättigte C₁₋₁₀-Cycloalkylgruppe, die gegebenenfalls 0 bis 5 Heteroatome, ausgewählt aus N, O, S, enthält;
eine Alkylgruppe, die 1 bis 10 Kohlenstoffatome und/oder 0 bis 5 Heteroatome enthält und die mit einem aromatischen oder heteroaromatischen Ring substituiert ist;
**dadurch gekennzeichnet, dass** eine Carbonsäure der Formel (II): 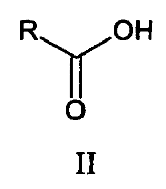
mit Diphosgen, Triphosgen, Mesylchlorid, Phosphoroxychlorid, Thionylchlorid, Phosphortrichlorid oder Bromanalogen davon in einem Lösungsmittel, ausgewählt aus Chlorbenzol, Sulfolan oder Methansulfonsäure, umgesetzt wird, um ein Säurechlorid oder Säurebromid zu bilden, dann Phosphortrichlorid zu der Reaktionsmischung zugegeben wird, um eine Phosphorylierung durchzuführen, die Mischung dann mit Wasser hydrolysiert wird und dann das Produkt durch Einstellen des pH-Werts erhalten wird,
wobei das Verfahren ohne Zugabe von phosphoriger Säure oder Phosphorsäure durchgeführt wird.

2. Verfahren gemäss Anspruch 1, **dadurch gekennzeichnet, dass** R eine (1H-Imidazol-1-yl)methyl-Gruppe ist.

3. Verfahren gemäss Anspruch 1, **dadurch gekennzeichnet, dass** R eine (3-Pyridyl)methyl-Gruppe ist.

4. Verfahren gemäss einem der Ansprüche 1 bis 3, **dadurch gekennzeichnet, dass** das bei der Phosphorylierung verwendete Lösungsmittel Methansulfonsäure ist.

5. Verfahren gemäss einem der Ansprüche 1 bis 4, **dadurch gekennzeichnet, dass** bei der Phosphorylierung das Verhältnis zwischen dem Lösungsmittel und der Ausgangsverbindung zwischen 1:1 und 20:1 beträgt.

6. Verfahren gemäss einem der Ansprüche 1 bis 5, **dadurch gekennzeichnet, dass** die bei der Phosphorylierung angewendete Temperatur zwischen 25 und 120°C beträgt.

7. Verfahren gemäss Anspruch 6, **dadurch gekennzeichnet, dass** die Temperatur zwischen 40 und 100°C beträgt.

## Revendications

1. Procédé de préparation de composés de formule (I) : 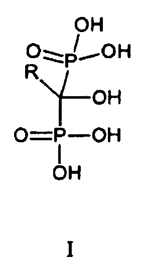 où R représente :
un groupement alkyle en C₁-C₄ saturé ou insaturé qui contient éventuellement 0 à 5 hétéroatomes choisis parmi N, O, S ;
un groupement cycloalkyle en C₁-C₁₀ saturé ou insaturé qui contient éventuellement 0 à 5 hétéroatomes choisis parmi N, O, S ;
un groupement alkyle qui contient 1 à 10 atomes de carbone et/ou 0 à 5 hétéroatomes et qui est substitué par un noyau aromatique ou hétéroaromatique ;
**caractérisé en ce que** l'on fait réagir de l'acide carboxylique de formule (II) : 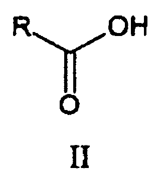 avec du diphosgène, du triphosgène, du chlorure de mésyle, de l'oxychlorure de phosphore, du chlorure de thionyle, du trichlorure de phosphore ou leurs analogues de brome dans un solvant choisi parmi le chlorobenzène, le sulfolane ou l'acide méthanesulfonique afin de former le chlorure d'acide ou le bromure d'acide, on ajoute du trichlorure de phosphore au mélange réactionnel afin de réaliser une phosphorylation, puis le mélange est hydrolysé avec de l'eau et ensuite le produit est obtenu en réglant la valeur du pH,
le procédé étant réalisé sans addition d'acide phosphoreux ni d'acide phosphorique.

2. Procédé selon la revendication 1, **caractérisé en ce que** R est le groupement (1H-imidazol-1-yl)méthyle.

3. Procédé selon la revendication 1, **caractérisé en ce que** R est le groupement (3-pyridyl)méthyle.

4. Procédé selon l'une quelconque des revendications 1 à 3, **caractérisé en ce que** le solvant utilisé en phosphorylation est l'acide méthanesulfonique.

5. Procédé selon l'une quelconque des revendications 1 à 4, **caractérisé en ce que**, en phosphorylation, la proportion entre le solvant et le composé de départ se situe entre 1:1 et 20:1.

6. Procédé selon l'une quelconque des revendications 1 à 5, **caractérisé en ce que** la température appliquée en phosphorylation se situe entre 25 et 120 °C.

7. Procédé selon la revendication 6, **caractérisé en ce que** la température se situe entre 40 et 100 °C.
